# EUROPEAN PATENT APPLICATION

(11) **EP 3 089 436 A1**
(43) Date of publication of application: **02.11.2016**
(21) Application number: 16165207.8
(22) Date of filing: 14.04.2016
(51) Int. Cl.: H04M 3/42, H04L 29/06, G06Q 10/10

(54) **METHODS AND DEVICES FOR CALLING BASED ON CLOUD CARD**

(30) Priority: 27.04.2015 CN 201510205370
(71) Applicant: Xiaomi Inc., Beijing 100085 (CN)
(72) Inventor: NIU, Kun, 100085 BEIJING (CN); BAO, Xiehao, 100085 BEIJING (CN); ZHAO, Zhenhai, 100085 BEIJING (CN)
(74) Representative: Perrot, Emilie

(57) **Abstract**

A method for calling based on a cloud card comprising : receiving (110) cloud card data of a first user, the cloud card data carrying a user identification of the first user; when searching out a cloud card corresponding to the first user according to the user identification of the first user, updating (120) the cloud card corresponding to the first user according to the cloud card data of the first user to obtain an updated cloud card of the first user; and sending (130) the updated cloud card of the first user to a second user which has stored the user identification of the first user, such that when the first user communicates with the second user, the second user can identify the first user based on the updated cloud card of the first user and display the updated cloud card of the first user.

## Description

### TECHNICAL FIELD

The present invention generally relates to the field of network communication technology, and more particularly, to methods and devices for calling based on a cloud card.

### BACKGROUND

With the continuous development of network communication technology, conventional electronic business cards have been gradually replaced by cloud cards. A cloud card is an electronic business card created by a user and stored in a cloud server. In the related art, after he uploads cloud cards, a user can manage the cloud cards, for example, classifying the cloud cards, sorting the cloud cards, fast searching the cloud cards, sharing the cloud cards with his friends and timely reminding. However, after a cloud card of a user is updated, it is hardly possible for a contact of the user to quickly identify the cloud card of the user, resulting in a poor user experience.

### SUMMARY

The present invention provides methods and devices for calling based on a cloud card, which can solve the problem in the related art that after a cloud card of a user is updated, it will become difficult to identify the cloud card of the user, resulting in a poor user experience.

According to a first aspect, the invention relates to a method for calling based on a cloud card, which is performed by a cloud server, the method comprising:
receiving cloud card data of a first user, the cloud card data carrying a user identification of the first user;
when searching out a cloud card corresponding to the first user according to the user identification of the first user, updating the cloud card corresponding to the first user according to the cloud card data of the first user to obtain an updated cloud card of the first user; and
sending the updated cloud card of the first user to a second user which has stored the user identification of the first user, such that when the first user communicates with the second user, the second user can identify the first user based on the updated cloud card of the first user and display the updated cloud card of the first user.

In a particular embodiment, the cloud card data of the first user contains each item of the cloud card corresponding to the first user and a version number, and the step of updating the cloud card corresponding to the first user according to the cloud card data of the first user to obtain an updated cloud card of the first user comprises:
comparing the received version number with a version number of a cloud card corresponding to the first user which is stored locally, to obtain a comparison result; and
when the comparison result indicates that the received cloud card data is a more recent version of the cloud card corresponding to the first user which is stored locally, updating the cloud card corresponding to the first user which is stored locally with the received cloud card data to obtain the updated cloud card of the first user.

In a particular embodiment, the method further comprises:
when no cloud card corresponding to the first user is searched out according to the user identification of the first user, creating a cloud card corresponding to the first user according to the cloud card data of the first user, to obtain a created cloud card of the first user; and
sending the created cloud card of the first user to a second terminal corresponding to a second user which has stored the user identification of the first user, such that when the first user communicates with the second user, the second user can identify the first user based on the created cloud card of the first user and display the created cloud card of the first user.

In a particular embodiment, the first user communicates with the second user through at least one of the following manners:
the first user calls the second user with an updated telephone number;
the first user sends a short message to the second user with an updated telephone number; and
the first user sends an email to the second user with an updated email address;
wherein, the updated telephone number and the updated email address are stored in the cloud card data of the first user.

According to a second aspect, the invention relates to a method for calling based on a cloud card, which is performed by a terminal corresponding to a second user, the method comprising:
receiving an updated cloud card of a first user which is sent from a cloud server;
updating a cloud card corresponding to the first user which is stored locally with the updated cloud card of the first user; and
when the first user communicates with a second user which has stored a user identification of the first user, identifying the first user based on the updated cloud card of the first user and displaying the updated cloud card of the first user.

In a particular embodiment, the method further comprises:
receiving a created cloud card of the first user which is sent from the cloud server;
storing the created cloud card of the first user in a local contact list; and
when the first user communicates with the second user, identifying the first user based on the created cloud card of the first user and displaying the created cloud card of the first user.

According to a third aspect, the invention relates to a device for calling based on a cloud card, which is incorporated in a cloud server, the device comprising:
a receiving module configured to receive cloud card data of a first user, the cloud card data carrying a user identification of the first user;
an updating module configured to, when a cloud card corresponding to the first user is searched out according to the user identification of the first user, update the cloud card corresponding to the first user according to the cloud card data of the first user to obtain an updated cloud card of the first user; and
a first sending module configured to send the updated cloud card of the first user to a second user which has stored the user identification of the first user, such that when the first user communicates with the second user, the second user can identify the first user based on the updated cloud card of the first user and display the updated cloud card of the first user.

In a particular embodiment, the cloud card data of the first user contains each item of the cloud card corresponding to the first user and a version number, and the updating module comprises:
a comparing sub-module configured to compare the received version number with a version number of a cloud card corresponding to the first user which is stored locally, to obtain a comparison result; and
an updating sub-module configured to, when the comparison result indicates that the received cloud card data is a more recent version of the cloud card corresponding to the first user which is stored locally, update the cloud card corresponding to the first user which is stored locally with the received cloud card data to obtain the updated cloud card of the first user.

In a particular embodiment, the device further comprises:
a creating module configured to, when no cloud card corresponding to the first user is searched out according to the user identification of the first user, create a cloud card corresponding to the first user according to the cloud card data of the first user, to obtain a created cloud card of the first user; and
a second sending module configured to send the created cloud card of the first user to a second terminal corresponding to a second user which has stored the user identification of the first user, such that when the first user communicates with the second user, the second user can identify the first user based on the created cloud card of the first user and display the created cloud card of the first user.

In a particular embodiment, the first user communicates with the second user through at least one of the following manners:
the first user calls the second user with an updated telephone number;
the first user sends a short message to the second user with an updated telephone number; and
the first user sends an email to the second user with an updated email address;
wherein, the updated telephone number and the updated email address are stored in the cloud card data of the first user.

According to a fourth aspect, the invention relates to a device for calling based on a cloud card, which is incorporated in a terminal corresponding to a second user, the device comprising:
a first receiving module configured to receive an updated cloud card of a first user which is sent from a cloud server;
an updating module configured to update a cloud card corresponding to the first user which is stored locally with the updated cloud card of the first user; and
a first displaying module configured to, when the first user communicates with a second user which has stored a user identification of the first user, identify the first user based on the updated cloud card of the first user and display the updated cloud card of the first user.

In a particular embodiment, the device further comprises:
a second receiving module configured to receive a created cloud card of the first user which is sent from the cloud server;
a storing module configured to store the created cloud card of the first user in a local contact list; and
a second displaying module configured to, when the first user communicates with the second user, identify the first user based on the created cloud card of the first user and display the created cloud card of the first user.

According to a fifth aspect, the invention relates to a device for calling based on a cloud card, which is incorporated in a cloud server, the device comprising:
a processor; and
a memory for storing instructions executable by the processor;
wherein the processor is configured to perform:
receiving cloud card data of a first user, the cloud card data carrying a user identification of the first user;
when searching out a cloud card corresponding to the first user according to the user identification of the first user, updating the cloud card corresponding to the first user according to the cloud card data of the first user to obtain an updated cloud card of the first user; and
sending the updated cloud card of the first user to a second user which has stored the user identification of the first user, such that when the first user communicates with the second user, the second user can identify the first user based on the updated cloud card of the first user and display the updated cloud card of the first user.

According to a sixth aspect, the invention relates to a device for calling based on a cloud card, which is incorporated in a terminal corresponding to a second user, the device comprising:
a processor; and
a memory for storing instructions executable by the processor;
wherein the processor is configured to perform:
receiving an updated cloud card of a first user which is sent from a cloud server;
updating a cloud card corresponding to the first user which is stored locally with the updated cloud card of the first user; and
when the first user communicates with a second user corresponding to a second terminal which has stored a user identification of the first user, identifying the first user based on the updated cloud card of the first user and displaying the updated cloud card of the first user.

In one particular embodiment, the steps of any one of the methods described above are determined by computer program instructions.

Consequently, according to a seventh aspect, the invention is also directed to a computer program for executing the steps of any one of the methods described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can comprise storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present invention may have the following beneficial effects.

In the present invention, after it receives the cloud card data of the first user, the cloud server can automatically update the cloud card corresponding to the first user according to the cloud card data, and send the updated cloud card to the second user, such that the second user can automatically update the cloud card of the first user and when the first user communicates with the second user, the second user can automatically identify the first user. Thereby, it can improve the speed and accuracy of the identification of the first user by the second user, and can improve the user experience for the second user.

In the present invention, after the cloud server receives the cloud card data of the first user, if the cloud card data contains each item of the cloud card corresponding to the first user and a version number, the cloud server can directly determine whether to update the stored cloud card of the first user according to the version number. If it is determined to update the cloud card, the stored cloud card of the first user can be directly replaced with the received cloud card data. Thereby, the update speed of the cloud server can be relatively fast.

In the present invention, after the cloud server receives the cloud card data of the first user, when it has not created a cloud card of the first user, the server will create a cloud card of the first user according to the received data and send the created cloud card to the second user. Then the second user can store the cloud card of the first user and when the first user communicates with the second user, the second user can automatically identify the first user. Thereby, it can improve the speed and accuracy of the identification of the first user by the second user, and can improve the user experience for the second user.

In the present invention, after the second terminal receives the updated cloud card of the first user (the first user is a contact of the second user corresponding to a second terminal) which is sent from the server, the second terminal can automatically update the cloud card corresponding to the first user which is stored locally with the updated cloud card of the first user. Then, when the first user communicates with the second user, the second terminal can identify the first user based on the updated cloud data of the first user and display the updated cloud card of the first user. Thereby, the second user can automatically identify the first user based on the updated cloud card of the first user. Thus, it can improve the speed and accuracy of the identification of the first user by the second user, and can improve the user experience for the second user.

In the present invention, the second terminal receives the created cloud card of the first user which is sent from the cloud server, and automatically stores the created cloud card of the first user in the local contact list. When the first user communicates with the second user, the second terminal can identify the first user based on the created cloud card of the first user and display the created cloud card of the first user. Thereby, the second user can automatically identify the first user based on the created cloud card of the first user. Thus, it can improve the speed and accuracy of the identification of the first user by the second user, and can improve the user experience for the second user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for calling based on a cloud card according to an exemplary embodiment of the present invention;
Fig. 2 is a flow chart illustrating another method for calling based on a cloud card according to an exemplary embodiment of the present invention;
Fig. 3 is a flow chart illustrating another method for calling based on a cloud card according to an exemplary embodiment of the present invention;
Fig. 4 is a flow chart illustrating another method for calling based on a cloud card according to an exemplary embodiment of the present invention;
Fig. 5 is a flow chart illustrating another method for calling based on a cloud card according to an exemplary embodiment of the present invention;
Fig. 6 is a diagram illustrating an application scenario of a method for calling based on a cloud card according to an exemplary embodiment of the present invention;
Fig. 7 is a block diagram illustrating a device for calling based on a cloud card according to an exemplary embodiment of the present invention;
Fig. 8 is a block diagram illustrating another device for calling based on a cloud card according to an exemplary embodiment of the present invention;
Fig. 9 is a block diagram illustrating another device for calling based on a cloud card according to an exemplary embodiment of the present invention;
Fig. 10 is a block diagram illustrating another device for calling based on a cloud card according to an exemplary embodiment of the present invention;
Fig. 11 is a block diagram illustrating another device for calling based on a cloud card according to an exemplary embodiment of the present invention;
Fig. 12 is a block diagram illustrating a device for calling based on a cloud card according to an exemplary embodiment of the present invention; and
Fig. 13 is another block diagram illustrating a device for calling based on a cloud card according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present invention. As used in the present invention and the appended claims, terms in singular form such as "a", "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present invention, a first element can also be referred to as a second element. Similarly, a second element can also be referred to as a first element. Depending on the context, a term "if" as used herein can be interpreted as "when", "where" or "in response to".

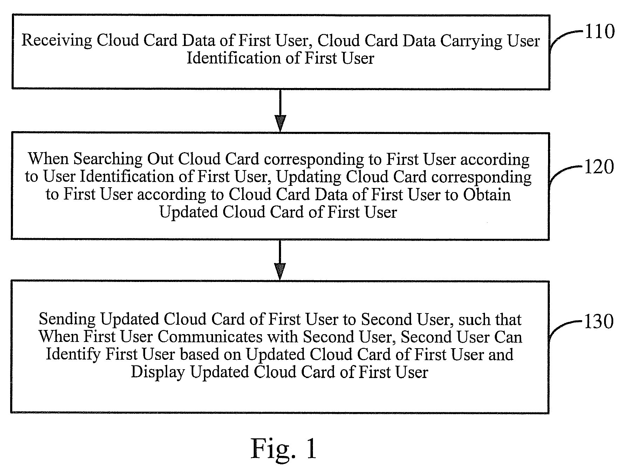

Fig. 1 is a flow chart illustrating a method for calling based on a cloud card according to an exemplary embodiment of the present invention, which is performed by a cloud server. The method includes the following steps.

In step 110, cloud card data of a first user is received, the cloud card data carrying a user identification of the first user. The cloud card data of the first user can be previously sent to the cloud server through a first terminal by the first user.

In the embodiment of the present invention, the cloud card data can be data in a cloud card which is originally created by the first user, or can be data to be updated. The cloud card can be an electronic business card created by the first user and stored in the cloud server. After the first user uploads the cloud card, the server can manage the cloud card of the first user. For example, assuming that the first user is a user A, the cloud card of the user A contains a name, a mobile phone number, a portrait and the like of the user A.

In addition, the user identification of the first user can be a user name registered in the cloud server by the first user, or can be a mobile phone number or the like of the first user. The purpose is for the cloud server to search out a cloud card corresponding to the first user based on the user identification.

In step 120, when a cloud card corresponding to the first user is searched out according to the user identification of the first user, the cloud card corresponding to the first user is updated according to the cloud card data of the first user to obtain an updated cloud card of the first user.

In the embodiment of the present invention, when a cloud card corresponding to the first user is searched out according to the user identification of the first user, it means the cloud server has stored the cloud card corresponding to the first user, and the currently received cloud card data of the first user is used to update the existing cloud card by the first user.

For example, when the first user wants to update a portrait of the existing cloud card, and the cloud card data of the first user received by the cloud server contains a replacement portrait of the first user, the cloud server updates the portrait in the cloud card of the first user which is stored locally with the replacement portrait. Then, the updated cloud card contains the most recent portrait of the first user.

In another example, when the first user wants to update the existing mobile phone number in the cloud card or add a new mobile phone number, and the cloud card data of the first user received by the cloud server contains a replacement mobile phone number or a new mobile phone number to be added, the cloud server updates the mobile phone number in the cloud card of the first user which is stored locally with the replacement mobile phone number or the new mobile phone number to be added. Then, the updated cloud card contains the updated mobile phone number of the first user or the new mobile phone number to be added.

In step 130, the updated cloud card of the first user is sent to a second user which has stored the user identification of the first user, such that when the first user communicates with the second user, the second user can identify the first user based on the updated cloud card of the first user and display the updated cloud card of the first user.

In the embodiment of the present invention, the second user can be a user who has stored the user identification of the first user. For example, the first user is a contact of the second user and is recorded in a contact list of the second user. If the first user has created a cloud card of the first user, the cloud server will send the cloud card of the first user to a second terminal corresponding to the second user and store it in the contact list of the second user. If the first user wants to update his cloud card, the cloud server will update the cloud card according to the updated cloud card data of the first user to obtain an updated cloud card. At the meantime, the cloud card of the first user in the contact list of the second user will be automatically updated by the cloud server.

For example, assuming that the first user is a user A and the second user is a user B, when the user A calls the user B with an updated mobile phone number or an added new mobile phone number, the second terminal used by the user B will display the most recent cloud card of the user A in a call receiving interface. Alternatively, when the user A sends a short message to the user B with an updated mobile phone number or an added new mobile phone number, the second terminal used by the user B will display the most recent cloud card of the user A in a short message interface.

It can be seen from the above embodiment that, after it receives the cloud card data of the first user, the cloud server can automatically update the cloud card corresponding to the first user according to the cloud card data, and send the updated cloud card to the second user, such that the second user can automatically update the cloud card of the first user and when the first user communicates with the second user, the second user can automatically identify the first user. Thereby, it can improve the speed and accuracy of the identification of the first user by the second user, and can improve the user experience for the second user.

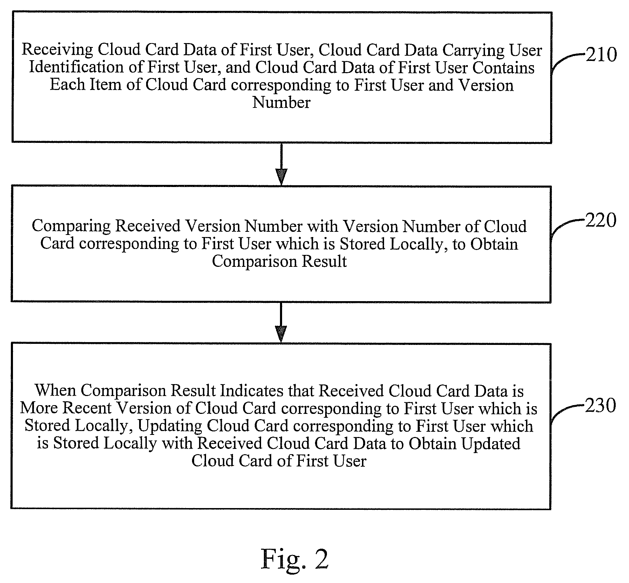

Fig. 2 is a flow chart illustrating another method for calling based on a cloud card according to an exemplary embodiment of the present invention, which is performed by a cloud server. Based on the embodiment as shown in Fig. 1, the method includes the following steps.

In step 210, cloud card data of the first user is received, the cloud card data of the first user carrying a user identification of the first user. The cloud card data of the first user can contain each item of the cloud card corresponding to the first user and a version number.

In step 220, the received version number is compared with a version number of a cloud card corresponding to the first user which is stored locally, to obtain a comparison result.

For example, assuming that the first user is a user A, the cloud card of the user A stored in the cloud server contains a name, a mobile phone number 1, a portrait 1 and the like of the user A, and the version number is 1. When the user A wants to update the mobile phone number 1 with a mobile phone number 2, and update the portrait 1 with a portrait 2, the cloud card data of the first user which is received by the cloud server contains the name of the user A, the telephone number 2, the portrait 2 and the version number is 2. The cloud server compares the received version number 2 with the version number 1, to obtain a comparison result that the cloud card corresponding to the version number 2 is a more recent version of the cloud card corresponding to the version number 1.

In step 230, when the comparison result indicates that the received cloud card data is a more recent version of the cloud card corresponding to the first user which is stored locally, the cloud card corresponding to the first user which is stored locally is updated with the received cloud card data to obtain the updated cloud card of the first user.

In addition, when the comparison result indicates that received cloud card data is not a more recent version of the cloud card corresponding to the first user which is searched out, the cloud card is not updated.

In can be seen from the above embodiment that, after the cloud server receives the cloud card data of the first user, if the cloud card data contains each item of the cloud card corresponding to the first user and a version number, the cloud server can directly determine whether to update the stored cloud card of the first user according to the version number. If it is determined to update the cloud card, the stored cloud card of the first user can be directly replaced with the received cloud card data. Thereby, the update speed of the cloud server can be relatively fast.

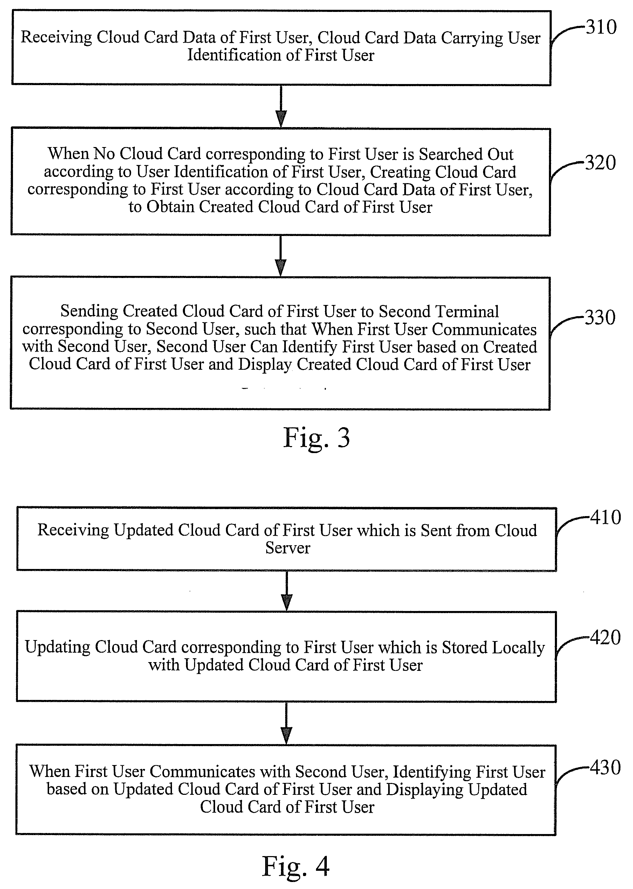

Fig. 3 is a flow chart illustrating another method for calling based on a cloud card according to an exemplary embodiment of the present invention, which is performed by a cloud server. Based on the embodiment as shown in Fig. 1, the method includes the following steps.

In step 310, cloud card data of a first user is received, the cloud card data carrying a user identification of the first user.

In the embodiment of the present invention, cloud card data can be data of a cloud card originally created by the first user. After the first user uploads the cloud card data, the cloud server can create a cloud card of the first user according to the cloud card data. For example, assuming that the first user is a user A, the cloud card of the user A contains a name, a mobile phone number, a portrait and the like of the user A.

In step 320, when no cloud card corresponding to the first user is searched out according to the user identification of the first user, a cloud card corresponding to the first user is created according to the cloud card data of the first user, to obtain a created cloud card of the first user.

In the embodiment of the present invention, when no cloud card corresponding to the first user is searched out according to the user identification of the first user, it means that the cloud server has not created a cloud card corresponding to the first user, therefore it can create a cloud card corresponding to the first user according to the received cloud card data of the first user.

In step 330, the created cloud card of the first user is sent to a second user which has stored the user identification of the first user, such that when the first user communicates with the second user, the second user can identify the first user based on the created cloud card of the first user and display the created cloud card of the first user.

In the embodiment of the present invention, the second user can be a user who has stored the user identification of the first user. For example, the first user is a contact of the second user and is recorded in a contact list of the second user. If the first user has created a cloud card of the first user, the cloud server will send the cloud card of the first user to a second terminal corresponding to the second user and store it in the contact list of the second user. Then, when the first user communicates with the second user, the second terminal can display the created cloud card of the first user such that the second user can identify the first user based on the created cloud card of the first user.

It can be seen from the above embodiment that, after the cloud server receives the cloud card data of the first user, when it has not created a cloud card of the first user, the server will create a cloud card of the first user according to the received data and send the created cloud card to the second user. Then the second user can store the cloud card of the first user and when the first user communicates with the second user, the second user can automatically identify the first user. Thereby, it can improve the speed and accuracy of the identification of the first user by the second user, and can improve the user experience for the second user.

In addition, in the above method for calling based on a cloud card as shown in Figs. 1 to 4, the first user can communicate with the second user through at least one of the following communication manners.

First Manner: the first user calls the second user with an updated telephone number. Second Manner: the first user sends a short message to the second user with an updated telephone number.

Third Manner: the first user sends an email to the second user with an updated email address.

The updated telephone number and the updated email address can be stored in the cloud card data of the first user.

Fig. 4 is a flow chart illustrating another method for calling based on a cloud card according to an exemplary embodiment of the present invention, which is performed by a second terminal which is used by a second user. The method includes the following steps.

In step 410, an updated cloud card of a first user which is sent from a cloud server is received.

In the embodiment of the present invention, the first user can be a contact of the second user and is recorded in a contact list of the second user. If the first user wants to update his cloud card, the cloud server will update the cloud card according to the updated cloud card data of the first user to obtain an updated cloud card. At the meantime, the cloud card of the first user in the contact list of the second user will be automatically updated by the cloud server.

In step 420, a cloud card corresponding to the first user which is stored locally is updated with the updated cloud card of the first user.

In step 430, when the first user communicates with a second user which has stored a user identification of the first user, the first user is identified based on the updated cloud card of the first user and the updated cloud card of the first user is displayed.

For example, assuming that the first user is a user A and the second user is a user B, when the user A calls the user B with the updated mobile phone number or the added new mobile phone number, the second terminal used by the user B will display the most recent cloud card of the user A in a call receiving interface. Alternatively, when the user A sends a short message to the user B with an updated mobile phone number or an added new mobile phone number, the second terminal used by the user B will display the most recent cloud card of the user A in a short message interface. Thereby, the second user can identify the first user more quickly, resulting in an improved user experience for the second user.

It can be seen from the above embodiment that, after the second terminal receives the updated cloud card of the first user (the first user is a contact of the second user corresponding to a second terminal) which is sent from the server, the second terminal can automatically update the cloud card corresponding to the first user which is stored locally with the updated cloud card of the first user. Then, when the first user communicates with the second user, the second terminal can identify the first user based on the updated cloud data of the first user and display the updated cloud card of the first user. Thereby, the second user can automatically identify the first user based on the updated cloud card of the first user. Thus, it can improve the speed and accuracy of the identification of the first user by the second user, and can improve the user experience for the second user.

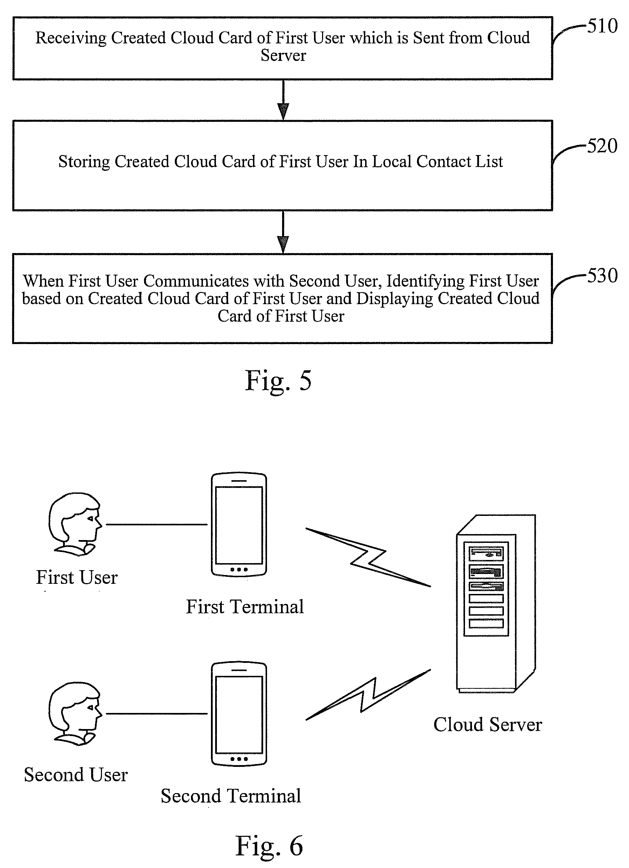

Fig. 5 is a flow chart illustrating another method for calling based on a cloud card according to an exemplary embodiment of the present invention, which is performed by a second terminal which is used by a second user. Based on the embodiment as shown in Fig. 4, the method includes the following steps.

In step 510, a created cloud card of the first user which is sent from the cloud server is received.

In the embodiment of the present invention, the first user can be a contact of the second user and can be stored in a contact list of the second user. If the first user creates a cloud card of the first user, the cloud server can send the cloud card of the first user to the second terminal corresponding to the second user and store the cloud card in the contact list of the second user.

In step 520, the created cloud card of the first user is stored in a local contact list.

In step 530, when the first user communicates with the second user, the first user is identified based on the created cloud card of the first user and the created cloud card of the first user is displayed.

It can be seen from the above embodiment that the second terminal receives the created cloud card of the first user which is sent from the cloud server and automatically stores the created cloud card of the first user in the local contact list. When the first user communicates with the second user, the second terminal can identify the first user based on the created cloud card of the first user and display the created cloud card of the first user. Thereby, the second user can automatically identify the first user based on the created cloud card of the first user. Thus, it can improve the speed and accuracy of the identification of the first user by the second user, and can improve the user experience for the second user.

Fig. 6 is a diagram illustrating an application scenario of a method for calling based on a cloud card according to an exemplary embodiment of the present invention. The application scenario involves a cloud server, a first terminal and a second terminal. A first user uses the first terminal and the second user uses the second terminal.

The first terminal acquires cloud card data of the first user to which the first terminal corresponds, and the cloud card data carries a user identification of the first user. The first terminal sends the cloud card data to the cloud server. When the cloud server searches out a cloud card corresponding to the first user according to the user identification of the first user, the cloud server updates the cloud card corresponding to the first user with the cloud card data of the first user, to obtain an updated cloud card of the first user. Then the cloud server sends the updated cloud card of the first user to the second terminal corresponding to the second user which has stored the user identification of the first user. The second terminal updates the cloud card corresponding to the first user which is stored locally with the updated cloud card of the first user. Then, when the first user communicates with the second user, the second terminal can identify the first user based on the updated cloud card of the first user and display the updated cloud of the first user, such that the second user can identify the first user based on the updated cloud card of the first user. Thereby, the second user can identify the first user according to the updated cloud card of the first user more quickly, resulting in an improved user experience for the second user.

Corresponding to the method for calling based on a cloud card according to the above embodiments, the present invention also provides embodiments involving a device for calling based on a cloud card.

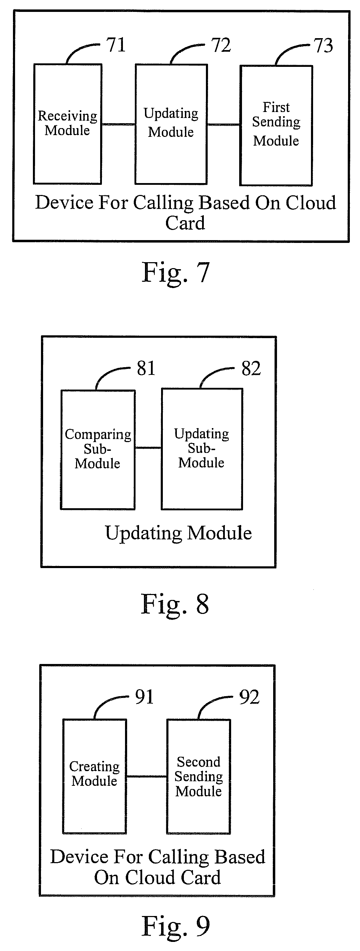

Fig. 7 is a block diagram illustrating a device for calling based on a cloud card according to an exemplary embodiment of the present invention, which is incorporated in a cloud server, and configured to perform the method for calling based on a cloud card as shown in Fig. 1. The device includes: a receiving module 71, an updating module 72 and a first sending module 73.

The receiving module 71 is configured to receive cloud card data of a first user, the cloud card data carrying a user identification of the first user.

The updating module 72 is configured to, when a cloud card corresponding to the first user is searched out according to the user identification of the first user, update the cloud card corresponding to the first user according to the cloud card data of the first user to obtain an updated cloud card of the first user.

The first sending module 73 is configured to send the updated cloud card of the first user to a second user which has stored the user identification of the first user, such that when the first user communicates with the second user, the second user can identify the first user based on the updated cloud card of the first user and display the updated cloud card of the first user.

It can be seen from the above embodiment that, after it receives the cloud card data of the first user, the cloud server can automatically update the cloud card corresponding to the first user according to the cloud card data, and send the updated cloud card to the second user, such that the second user can automatically update the cloud card of the first user and when the first user communicates with the second user, the second user can automatically identify the first user. Thereby, it can improve the speed and accuracy of the identification of the first user by the second user, and can improve the user experience for the second user.

Fig. 8 is a block diagram illustrating another device for calling based on a cloud card according to an exemplary embodiment of the present invention, which is incorporated in a cloud server, and based on the embodiment as shown in Fig. 7, and configured to perform the method for calling based on a cloud card as shown in Fig. 2. The cloud card data of the first user contains each item of the cloud card corresponding to the first user and a version number, and the updating module 72 can include: a comparing sub-module 81 and an updating sub-module 82.

The comparing sub-module 81 is configured to compare the received version number with a version number of a cloud card corresponding to the first user which is stored locally, to obtain a comparison result.

The updating sub-module 82 is configured to, when the comparison result indicates that the received cloud card data is a more recent version of the cloud card corresponding to the first user which is stored locally, update the cloud card corresponding to the first user which is stored locally with the received cloud card data to obtain the updated cloud card of the first user.

It can be seen from the above embodiment that, after the cloud server receives the cloud card data of the first user, if the cloud card data contains each item of the cloud card corresponding to the first user and a version number, the cloud server can directly determine whether to update the stored cloud card of the first user according to the version number. If it is determined to update the cloud card, the stored cloud card of the first user can be directly replaced with the received cloud card data. Thereby, the update speed of the cloud server can be relatively fast.

Fig. 9 is a block diagram illustrating another device for calling based on a cloud card according to an exemplary embodiment of the present invention, which is incorporated in a cloud server, and based on the embodiment as shown in Fig. 7, and configured to perform the method for calling based on a cloud card as shown in Fig. 3. The device can also include: a creating module 91 and a second sending module 92.

The creating module 91 is configured to, when no cloud card corresponding to the first user is searched out according to the user identification of the first user, create a cloud card corresponding to the first user according to the cloud card data of the first user, to obtain a created cloud card of the first user.

The second sending module 92 is configured to send the created cloud card of the first user to a second terminal corresponding to a second user which has stored the user identification of the first user, such that when the first user communicates with the second user, the second user can identify the first user based on the created cloud card of the first user and display the created cloud card of the first user.

It can be seen from the above embodiment that, after the cloud server receives the cloud card data of the first user, when it has not created a cloud card of the first user, the server will create a cloud card of the first user according to the received data and send the created cloud card to the second user. Then the second user can store the cloud card of the first user and when the first user communicates with the second user, the second user can automatically identify the first user. Thereby, it can improve the speed and accuracy of the identification of the first user by the second user, and can improve the user experience for the second user.

In addition, in the above embodiment, the first user can communicate with the second user through at least one of the following communication manners: the first user calls the second user with an updated telephone number; the first user sends a short message to the second user with an updated telephone number; or the first user sends an email to the second user with an updated email address. The updated telephone number and the updated email address are stored in the cloud card data of the first user.

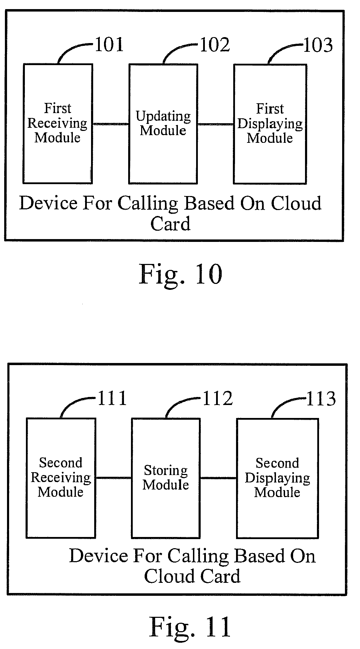

Fig. 10 is a block diagram illustrating another device for calling based on a cloud card according to an exemplary embodiment of the present invention, which is incorporated in a second terminal used by a second user, and configured to perform the method for calling based on a cloud card as shown in Fig. 4. The device can include: a first receiving module 101, an updating module 102 and a first displaying module 103.

The first receiving module 101 is configured to receive an updated cloud card of a first user which is sent from a cloud server.

The updating module 102 is configured to update a cloud card corresponding to the first user which is stored locally with the updated cloud card of the first user.

The first displaying module 103 is configured to, when the first user communicates with a second user which has stored a user identification of the first user, identify the first user based on the updated cloud card of the first user and display the updated cloud card of the first user.

It can be seen from the above embodiment that, after the second terminal receives the updated cloud card of the first user (the first user is a contact of the second user corresponding to a second terminal) which is sent from the server, the second terminal can automatically update the cloud card corresponding to the first user which is stored locally with the updated cloud card of the first user. Then, when the first user communicates with the second user, the second terminal can identify the first user based on the updated cloud data of the first user and display the updated cloud card of the first user. Thereby, the second user can automatically identify the first user based on the updated cloud card of the first user. Thus, it can improve the speed and accuracy of the identification of the first user by the second user, and can improve the user experience for the second user.

Fig. 11 is a block diagram illustrating another device for calling based on a cloud card according to an exemplary embodiment of the present invention, which is incorporated in a second terminal used by a second user, and configured to perform the method for calling based on a cloud card as shown in Fig. 5. The device can also include: a second receiving module 111, a storing module 112 and a second displaying module 113.

The second receiving module 111 is configured to receive a created cloud card of the first user which is sent from the cloud server.

The storing module 12 is configured to store the created cloud card of the first user in a local contact list.

The second displaying module 113 is configured to, when the first user communicates with the second user corresponding to the second terminal, display the updated cloud card of the first user, such that the second user can identify the first user according to the updated cloud card of the first user.

It can be seen from the above that, the second terminal receives the created cloud card of the first user which is sent from the cloud server, and automatically stores the created cloud card of the first user in the local contact list. When the first user communicates with the second user, the second terminal can identify the first user based on the created cloud card of the first user and display the created cloud card of the first user. Thereby, the second user can automatically identify the first user based on the created cloud card of the first user. Thus, it can improve the speed and accuracy of the identification of the first user by the second user, and can improve the user experience for the second user.

Corresponding to Fig. 7, the present invention provides another device for calling based on a cloud card, which is incorporated in a cloud server, including:
a processor; and
a memory for storing instructions executable by the processor;
wherein the processor is configured to perform:
receiving cloud card data of a first user, the cloud card data carrying a user identification of the first user;
when searching out a cloud card corresponding to the first user according to the user identification of the first user, updating the cloud card corresponding to the first user according to the cloud card data of the first user to obtain an updated cloud card of the first user; and
sending the updated cloud card of the first user to a second user which has stored the user identification of the first user, such that when the first user communicates with the second user, the second user can identify the first user based on the updated cloud card of the first user and display the updated cloud card of the first user.

Corresponding to Fig. 10, the present invention provides another device for calling based on a cloud card, which is incorporated in a second terminal, including:
a processor; and
a memory for storing instructions executable by the processor;
wherein the processor is configured to perform:
receiving an updated cloud card of a first user which is sent from a cloud server;
updating a cloud card corresponding to the first user which is stored locally with the updated cloud card of the first user; and
when the first user communicates with a second user corresponding to a second terminal which has stored a user identification of the first user, identifying the first user based on the updated cloud card of the first user and displaying the updated cloud card of the first user.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments. The device embodiments described above are merely illustrative. The units described as separate may be or may not be physically separate, and the components illustrated as a units may be or may not be physical units, and may be at the same location, or may be distributed to multiple units over the network. A part of or all of the modules can be selected to achieve the objective of the present invention as desired. One skilled in the art can understand and practice the embodiments without paying creative labor.

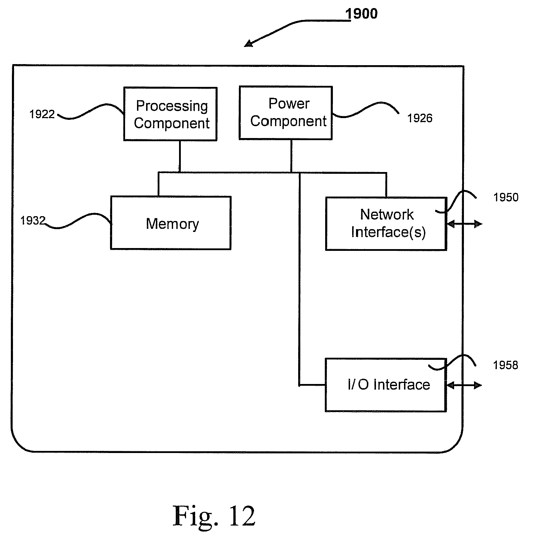

Fig. 12 is a block diagram illustrating a device 1900 (at a cloud server side) for calling based on a cloud card according to an exemplary embodiment of the present invention. For example, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions.

The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows ServerTM, Mac OS XTM, UnixTM, LinuxTM, FreeBSDTM, or the like.

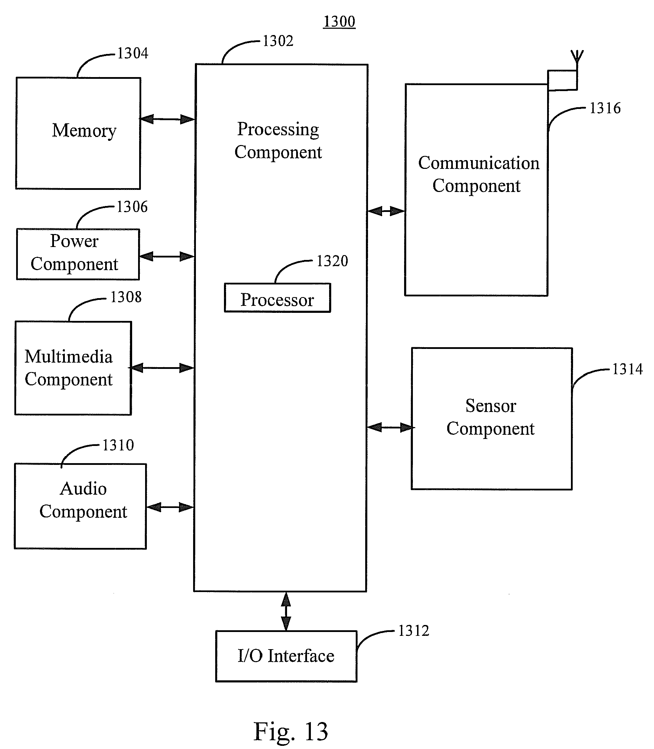

Fig. 13 is another block diagram illustrating a device 1300 (at a terminal side) for calling based on a cloud card according to an exemplary embodiment of the present invention. For example, the device 1300 may be a mobile phone with routing function, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, a microwave sensor or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

## Claims

1. A method for calling based on a cloud card, which is performed by a cloud server, the method comprising:
receiving (110, 210, 310) cloud card data of a first user, the cloud card data carrying a user identification of the first user;
when searching out a cloud card corresponding to the first user according to the user identification of the first user, updating (120) the cloud card corresponding to the first user according to the cloud card data of the first user to obtain an updated cloud card of the first user; and
sending (130) the updated cloud card of the first user to a second user which has stored the user identification of the first user, such that when the first user communicates with the second user, the second user can identify the first user based on the updated cloud card of the first user and display the updated cloud card of the first user.

2. The method of claim 1, wherein the cloud card data of the first user contains each item of the cloud card corresponding to the first user and a version number, and wherein the step (120) of updating the cloud card corresponding to the first user according to the cloud card data of the first user to obtain an updated cloud card of the first user comprises:
comparing (220) the received version number with a version number of a cloud card corresponding to the first user which is stored locally, to obtain a comparison result; and
when the comparison result indicates that the received cloud card data is a more recent version of the cloud card corresponding to the first user which is stored locally, updating (230) the cloud card corresponding to the first user which is stored locally with the received cloud card data to obtain the updated cloud card of the first user.

3. The method of claim 1, wherein the method further comprises:
when no cloud card corresponding to the first user is searched out according to the user identification of the first user, creating (320) a cloud card corresponding to the first user according to the cloud card data of the first user, to obtain a created cloud card of the first user; and
sending (330) the created cloud card of the first user to a second terminal corresponding to a second user which has stored the user identification of the first user, such that when the first user communicates with the second user, the second user can identify the first user based on the created cloud card of the first user and display the created cloud card of the first user.

4. The method of any one of claims 1-3, wherein the first user communicates with the second user through at least one of the following manners:
the first user calls the second user with an updated telephone number;
the first user sends a short message to the second user with an updated telephone number; and
the first user sends an email to the second user with an updated email address;
wherein, the updated telephone number and the updated email address are stored in the cloud card data of the first user.

5. A method for calling based on a cloud card, which is performed by a terminal corresponding to a second user, the method comprising:
receiving (410) an updated cloud card of a first user which is sent from a cloud server;
updating (420) a cloud card corresponding to the first user which is stored locally with the updated cloud card of the first user; and
when the first user communicates with a second user which has stored a user identification of the first user, identifying (430) the first user based on the updated cloud card of the first user and displaying the updated cloud card of the first user.

6. The method of claim 5, wherein the method further comprises:
receiving (510) a created cloud card of the first user which is sent from the cloud server;
storing (520) the created cloud card of the first user in a local contact list; and
when the first user communicates with the second user, identifying (530) the first user based on the created cloud card of the first user and displaying the created cloud card of the first user.

7. A device for calling based on a cloud card, which is incorporated in a cloud server, the device comprising:
a receiving module (71) configured to receive cloud card data of a first user, the cloud card data carrying a user identification of the first user;
an updating module (72) configured to, when a cloud card corresponding to the first user is searched out according to the user identification of the first user, update the cloud card corresponding to the first user according to the cloud card data of the first user to obtain an updated cloud card of the first user; and
a first sending module (73) configured to send the updated cloud card of the first user to a second user which has stored the user identification of the first user, such that when the first user communicates with the second user, the second user can identify the first user based on the updated cloud card of the first user and display the updated cloud card of the first user.

8. The device of claim 7, wherein the cloud card data of the first user contains each item of the cloud card corresponding to the first user and a version number, and the updating module (72) comprises:
a comparing sub-module (81) configured to compare the received version number with a version number of a cloud card corresponding to the first user which is stored locally, to obtain a comparison result; and
an updating sub-module (82) configured to, when the comparison result indicates that the received cloud card data is a more recent version of the cloud card corresponding to the first user which is stored locally, update the cloud card corresponding to the first user which is stored locally with the received cloud card data to obtain the updated cloud card of the first user.

9. The device of claim 7, wherein the device further comprises:
a creating module (91) configured to, when no cloud card corresponding to the first user is searched out according to the user identification of the first user, create a cloud card corresponding to the first user according to the cloud card data of the first user, to obtain a created cloud card of the first user; and
a second sending module (92) configured to send the created cloud card of the first user to a second terminal corresponding to a second user which has stored the user identification of the first user, such that when the first user communicates with the second user, the second user can identify the first user based on the created cloud card of the first user and display the created cloud card of the first user.

10. The device of any one of claims 7-9, wherein the first user communicates with the second user through at least one of the following manners:
the first user calls the second user with an updated telephone number;
the first user sends a short message to the second user with an updated telephone number; and
the first user sends an email to the second user with an updated email address;
wherein, the updated telephone number and the updated email address are stored in the cloud card data of the first user.

11. A device for calling based on a cloud card, which is incorporated in a terminal corresponding to a second user, the device comprising:
a first receiving module (101) configured to receive an updated cloud card of a first user which is sent from a cloud server;
an updating module (102) configured to update a cloud card corresponding to the first user which is stored locally with the updated cloud card of the first user; and
a first displaying module (103) configured to, when the first user communicates with a second user which has stored a user identification of the first user, identify the first user based on the updated cloud card of the first user and display the updated cloud card of the first user.

12. The device of claim 11, wherein the device further comprises:
a second receiving module (111) configured to receive a created cloud card of the first user which is sent from the cloud server;
a storing module (112) configured to store the created cloud card of the first user in a local contact list; and
a second displaying module (113) configured to, when the first user communicates with the second user, identify the first user based on the created cloud card of the first user and display the created cloud card of the first user.

13. A computer program comprising instructions for executing the steps of a method according to any one of claims 1 to 4 or the steps of a method according to claims 5 or 6 when said program is executed by a computer.

14. A recording medium readable by a computer and having recorded thereon a computer program comprising instructions for executing the steps of a method according to any one of claims 1 to 4 or the steps of a method according to claims 5 or 6.
